# NEUE EUROPÄISCHE PATENTSCHRIFT

(11) **EP 1 412 684 B2**
(45) Veröffentlichungstag und Bekanntmachung des Hinweises auf die Entscheidung über den Einspruch: **13.06.2012**
(45) Hinweis auf die Patenterteilung: 07.03.2007
(21) Anmeldenummer: 02754792.6
(22) Anmeldetag: 28.06.2002
(51) Int. Cl.: F26B 3/30

(54) **VERFAHREN UND VORRICHTUNG ZUM TROCKNEN UND/ODER VERNETZEN ODER ERWÄRMEN MITTELS ELEKTROMAGNETISCHER STRAHLUNG**
METHOD AND DEVICE FOR DRYING AND/OR CROSS-LINKING OR HEATING BY MEANS OF ELECTROMAGNETIC RADIATION
PROCEDE ET DISPOSITIF DE SECHAGE ET/OU DE RETICULATION OU DE CHAUFFAGE PAR RAYONNEMENT ELECTROMAGNETIQUE

(30) Priorität: 29.06.2001 DE 10131620
(43) Veröffentlichungstag der Anmeldung: 28.04.2004
(73) Patentinhaber: AdPhos Innovative Technologies GmbH, 83052 Bruckmühl (DE)
(72) Erfinder: WIRTH, Rolf, 83052 Bruckmühl (DE); BÄR, Kai, O., 83053 Bad Aibling (DE); GAUS, Rainer, 83700 Rottach-Egern (DE)
(74) Vertreter: Meissner, Bolte & Partner
(86) Internationale Anmeldenummer: PCT/EP2002/007187
(87) Internationale Veröffentlichungsnummer: WO 2003/002922

(56) Entgegenhaltungen:
- EP-A- 1 006 327
- WO-A-98/31474
- DE-A- 2 316 086
- DE-A- 19 857 045
- DE-U- 20 020 691
- DE-U- 20 101 168
- FR-A- 2 206 192
- FR-A- 2 504 824
- US-A- 4 271 347
- US-A- 4 594 266
- US-A- 5 517 768

## Beschreibung

Die vorliegende Erfindung betrifft ein Verfahren und eine Vorrichtung zur Volumenerwärmung eines Körpers.

Bei industriellen Trocknungsprozessen sowie zur Erwärmung bzw. Erweichung von Körpern, z.B. von Thermoplasten wird vielfach Strahlung aus dem Infrarotbereich eingesetzt, wenn ein möglichst rasches Trocknen und/oder Vernetzen eines Beschichtungsmittels bzw. Erweichen eines Körpers beabsichtigt ist. Diesbezüglich hat sich besonders der Einsatz von Strahlung aus dem Bereich des nahen Infrarot mit hoher Strahlungsleistung als besonders effizient erwiesen, da damit Trocknungs- und Erwärmungsprozesse in extrem kurzen Zeiten bewirkt werden können.

Herkömmlicherweise wird für derartige Prozesse als Strahlungsquelle ein Temperaturstrahler, insbesondere eine Halogenlampe verwendet, d.h. im wesentlichen ein Metalldraht, der durch den ihn durchfließenden elektrischen Strom zum Glühen gebracht wird. Temperaturstrahler weisen ein typisches Strahlungsspektrum auf, das sich entsprechend den physikalischen Gesetzmäßigkeiten für Temperaturstrahler über einen breiten Spektralbereich beiderseits eines Strahlungsmaximums erstreckt (Plancksche Strahlungsverteilung). Die Strahlungsintensität klingt mit vom Strahlungsmaximum zunehmender bzw. abnehmender Wellenlänge nur allmählich ab. So emittiert ein mit Strahlungsmaximum im Infrarot betriebener Temperaturstrahler auch Strahlung im sichtbaren Bereich, wenn auch mit im Verhältnis zur Intensität am Strahlungsmaximum verminderter Intensität.

Besonders bei der Nah-Infrarot-(NIR)-Technologie, bei der Strahlung des nahen Infrarots für Bestrahlungsprozesse eingesetzt wird, wird die Wellenlänge des Strahlungsmaximum der für den Bestrahlungsvorgang verwendeten Strahlung speziell an das zu bestrahlende Material - z.B. ein Beschichtungsmittel, oder ein räumlich ausgedehnter Körper - angepasst. Das bedeutet z.B., dass die zentrale Wellenlänge der Strahlung des Temperaturstrahlers so eingestellt wird, dass sie mit dem Absorptions- und/oder Reflexionsvermögen des zu bestrahlenden Materials, das zuvor ermittelt wurde, korrespondiert.

Speziell bei Anwendungen von Strahlung bei schichtartig aufgebauten Materialstrukturen kann es erforderlich sein, dass die Strahlung zunächst eine oder mehrere Materialschichten durchdringt, um erst in einer tiefer liegenden Schicht absorbiert zu werden. Für derartige Anwendungen der NIR-Technologie Prozesse ist ein rascher und effizienter Energieeintrag nur für eine bestimmte Wellenlänge bzw. für einen sehr schmalen Wellenlängenbereich gegeben. Aufgrund ihrer naturgemäßen Strahlungsverteilung emittieren Temperaturstrahler jedoch auch bei Wellenlängen, welche vom Strahlungsmaximum weit entfernt sind. Diese Strahlungsanteile sind häufig für den Bearbeitungsprozess nutzlos und darüber hinaus störend.

Letztendlich bedeutet jede Abgabe von Strahlungsenergie an einem Ort, an dem kein Effekt erzielt werden soll, sowie die Reflexion von Strahlung einen Verlust der zur Erzeugung der Strahlung aufgewandten Energie.

Es ist die Aufgabe der vorliegenden Erfindung ein Verfahren und eine Vorrichtung zur Erwärmung von Körpern mit verbesserter Energieeffizienz zu schaffen.

Diese Aufgabe wird gelöst mit einem Verfahren mit den Merkmalen gemäß Anspruch 1 und mit einer Vorrichtung mit den Merkmalen gemäß Anspruch 7.

Vorteilhafte Ausführungsformen der Erfindung sind in den Unteransprüchen angegeben.

Erfindungsgemäß wird zur Volumenerwärmung eines Körpers elektromagnetische Strahlung verwendet, wobei die elektromagnetische Strahlung ein schmalbandiges oder diskretes Spektrum aufweist, wobei der wesentliche Wirkanteil der Strahlung im Wellenlängenbereich des nahen Infrarots, insbesondere im Wellenlängenbereich von 0,78 µm bis 1,5µm liegt.

Dabei ist es, insbesondere wenn die weiter unter präzisierten Zeiten eingehalten werden, mit dem erfindungsgemäßen Verfahren prinzipiell möglich, das Erwärmen eines Körpers besonders rasch und mit geringem Kosten- bzw. Energieaufwand zu erzeugen.

Vorteilhafterweise kann bei erfindungsgemäßem Verwenden eines diskreten Spektrums die Wellenlänge der Strahlung optimal an die optischen Eigenschaften eines zu erwärmenden Körper angepasst werden, da die gesamte Strahlungsintensität im wesentlichen mit einer einzigen Wellenlänge emittiert wird.

Strahlungsanteile mit Wellenlängen, die größer bzw. kleiner als die des Strahlungsmaximums sind, sind - im Gegensatz zur Strahlung von Temperaturstrahlern - praktisch nicht vorhanden. Die diesen Strahlungsanteilen entsprechende Energie, die häufig nicht bzw. nur schlecht an das zu bestrahlende Material übertragen werden kann, muss zur Strahlungserzeugung nicht aufgewandt werden.

Darüber hinaus müssen weder Filter noch Blenden eingesetzt werden, um schädliche Strahlungsanteile zu unterdrücken.

Gemäß einer bevorzugten Ausführungsform wird als eine schmalbandig emittierende Strahlungsquelle insbesondere ein Laser, eine Plasma-, Lichbogen- bzw. Gasentladungslampe verwendet. Im Gegensatz zu Temperaturstrahlern, wie z.B. einer Halogenlampe, emittieren diese Strahlungsquellen ein diskretes oder monochromatisches Spektrum, das im wesentlichen durch strahlende Übergänge in Gasatomen bestimmt ist.

Entsprechend einer weiteren Ausführungsform, die besonders zur Durchführung von Verfahren der NIR-Technologie bevorzugt ist, wird der erforderliche Energieeintrag, zur Volumenerwärmung eines Körpers in einer Zeitdauer von weniger als 1 Minute, bevorzugt in weniger als 20 Sekunden und besonders bevorzugt in weniger als 1 Sekunde erzielt. Bei derartig kurzen Bestrahlungszeiten erfolgt der Energieeintrag in einen Körper so rasch, dass eine Energieübertragung durch langsam ablaufende Wärmeleitung im wesentlichen vermieden werden kann.

Gemäß einer weiteren Ausführungsform des Verfahrens liegt die Leistungsdichte der elektromagnetischen Strahlung insbesondere oberhalb von 100 kW/m², bevorzugt oberhalb von 200 kW/m² und besonders bevorzugt oberhalb von 1 MW/m². Das Verwenden hoher Leistungsdichten ist für viele Verfahren der NIR-Technologie charakteristisch. Damit können besonders kurze Bestrahlungsdauern bei gleichzeitiger Vermeidung einer langsam ablaufenden Wärmeleitung erzielt werden.

Entsprechend einer weiteren bevorzugten Ausführungsform wird die Bestrahlung im wesentlichen homogen über eine große Fläche abgegeben. Eine derartige Fläche weist eine Größe von insbesondere mehr 400 cm², bevorzugt von mehr als 2500 cm² und besonders bevorzugt von mehr als 1 m² und ganz besonders bevorzugt von mehr als 4 m² auf. Dabei schwankt die Leistungsdichte auf der bestrahlten Oberfläche um nicht mehr als 10%. Dadurch wird es möglich, großflächige Oberflächen in einer Anlage zu beschichten, wobei ein schädlicher ungleichmäßiger Energieeintrag in einen zu erwärmenden Körper vermieden werden kann.

Gemäß noch einer weiteren bevorzugten Ausführungsform wird die Strahlungsdichte über die bestrahlte Fläche entsprechend einem vorbestimmten Muster variiert. Insbesondere wird ein vorbestimmtes Strahlungsprofil erzeugt; d.h. dass die Strahlungsintensität über eine bestimmte Oberfläche von Ort zu Ort stetig oder unstetig variiert. Damit wird es möglich, die im Erwärmungsprozess eingesetzte Energiemenge zu reduzieren, da nur dort Strahlung auftrifft wird, wo sie für den Erwärmungsprozess benötigt wird. Bei der Erwärmung bzw. Erweichung eines Körpers kann in dem Körper ein bestimmtes Strahlungsprofil erzeugt werden, d.h., dass nur bestimmte gewünschte Bereiche des Körpers erwärmt bzw. erweicht werden, wohingegen andere Teile des Körpers kalt bleiben.

Erfindungsgemäss wird während der Volumenerwärmung die Wellenlänge der elektromagnetischen Strahlung variiert.

Die erfindungsgemäße Vorrichtung zur Durchführung des Verfahrens weist zumindest eine schmalbandig emittierende Strahlungsquelle mit wesentlichem Wirkanteil im Bereich des nahen Infrarots auf. Bei der Strahlungsquelle kann es sich insbesondere um einen Laser oder eine Plasma-, Lichtbogen- bzw. Gasentladungslampe handeln. Derartige Strahlungsquellen arbeiten auf dem Prinzip elektronischer Übergänge in Atomen. Da die Atomspektren diskret sind, werden im Gegensatz zu Temperaturstrahlern keine verbreiterten Strahlungsspektren emittiert.

Gemäß einer weiteren bevorzugten Ausführungsform der Vorrichtung handelt es sich bei der Strahlungsquelle um ein Laserdioden-Array. Laserdioden-Arrays können einfach durch Aneinanderreihen von Halbleiter-Laserdioden erzielt werden. Dadurch wird es möglich, auch größere flächige Strahlungsquellen mit einzelnen Lasern zu erzeugen.

Bevorzugt sind die Laserdioden des Laserdioden-Arrays einzeln und/oder in Gruppen steuerbar. Damit kann ohne Verändern des Laserdioden-Arrays ein Strahlungsprofil erzeugt werden, das insbesondere für NIR-Prozesse notwendig ist. Darüber hinaus bieten Laserdioden den Vorteil, dass die Strahlung im wesentlichen nur in eine Richtung emittiert wird. Im Gegensatz zu Temperaturstrahlern sind keine die in alle Richtungen abgestrahlte Strahlung bündelnde oder zurückreflektierende und Strahlung richtende Einrichtungen notwendig.

Gemäß noch einer bevorzugten Ausführungsform wird eine Strahlungsquelle bereit gestellt, die in der Lage ist, eine homogene Strahlung über eine Fläche von insbesondere mehr als 400 cm², bevorzugt von mehr als 2500 cm², besonders bevorzugt von mehr als 1 m² und ganz besonders bevorzugt von mehr als 4 m² im wesentlichen homogen zu erzeugen. Dies kann durch eine einzige geeignete Strahlungsquelle oder durch Kopplung mehrerer Strahlungsquellen zu einem Strahlungsmodul erreicht werden.

Weitere Vorteile, Merkmale und Anwendungsmöglichkeiten ergeben sich aus der folgenden Beschreibung von bevorzugten Anwendungsfeldern des erfindungsgemäßen Verfahrens bzw. Vorrichtung.

Das erfindungsgemäße Verfahren bzw. die erfindungsgemäße Vorrichtung wird zur Erwärmung von Körpern angewandt. Erwärmungsprozesse sind beim Warmverformen von Thermoplasten, insbesondere zum Streckblasen von PET-Behältem aus Preforms und zum Herstellen von Formteilen mit einer Oberflächenstruktur, notwendig.

Bei derartigen Anwendungen wird erfindungsgemäß die für den Prozeß erforderliche Wärme dem Rohling so zugeführt, dass die Energie nicht nur an den Außenflächen des Rohlings sondern auch gleichzeitig im Inneren des Materials zur Temperaturerhöhung aufgenommen wird. Die geschieht dadurch, dass die Wellenlänge der Strahlungsquelle derart an die Absorptions- bzw. Transmissionseigenschaften des Rohlings angepasst wird, dass die Energie auch tatsächlich in das Material eindringen kann und nicht - wie bei den sonst üblichen längeren Wellenlängen bei herkömmlichen Infrarot-Verfahren - schon in oberflächennahen Bereichen des Rohlings absorbiert wird. Es wird vorzugsweise eine Strahlungsquelle verwendet mit einer Emissionswellenlänge, bei welcher der Rohling einen niedrigeren Absorptionskoeffizienten aufweist als bei längeren Wellenlängen. Die Wellenlänge liegt im nahen Infrarot, d.h. in einem Bereich von Wellenlängen, die deutlich kürzer sind als die Wellenlängen, bei welchen das Intensitätsmaximum üblicher Wärmestrahlungsquellen liegt. Bevorzugt wird nicht nur eine besonders gleichmäßige Erwärmung des Rohlings in seiner Tiefe erreicht, sondern auch eine erheblich schnellere Erwärmung, da die Wärme nicht erst durch langsame Wärmeleitung ins Innere des Rohlings übertragen werden muss.

Bei schneller Erwärmung, d.h. innerhalb von Zeiten die kürzer sind als die Zeiten die zum Temperaturausgleich durch Wärmeleitung notwendig sind, ist es gemäß einer anderen Anwendungsweise möglich in einem Körper ein Temperaturprofil in Richtung der Flächenerstreckung des Substrats (d.h. nicht in die Tiefe des Substrates) zu erzeugen, wobei nicht bestrahlte Teile des Körpers im wesentlichen kalt und somit härter und weniger formbar bleiben. Ein derartiges Temperaturprofil ist insbesondere zur Formung von PET-Behältern aus Preforms erforderlich, wobei beispielsweise der Fuß des Preforms im Gegensatz zum Preform selbst möglichst nicht erwärmt werden soll. Weitere Einzelheiten diesbezüglich sind in der DE 197 36 462 A1 und in der DE 100 51 430.8 der Anmelderin offenbart. Speziell bei dieser Anwendung kann ein Laserdiodenarray eingesetzt werden, das zur Optimierung der eingesetzten Strahlungsenergie eine Fläche aufweist, die der Kontur eines Preforms entspricht. Da die Laserdioden des Arrays im wesentlichen im Richtung ihrer Kavität emittieren ist die gesamte emittierte Strahlung ohne zusätzliche Reflektoren auf den Preform gerichtet. Strahlungsverluste können minimiert werden.

Als Strahlungsquelle zur Durchführung des erfindungsgemäßen Verfahrens dient beispielsweise eine Infrarot-Bogenentladungslampe. Das Licht wird in einer derartigen Lampe durch eine Bogenentladung zwischen einer Kathode und einer Anode erzeugt. Zur Durchführung des erfindungsgemäßen Verfahrens wird für die Entladung ein Gas gewählt, dessen Spektrum primär Übergänge im nahen Infrarot aufweist.

Im Gegensatz zu Temperaturstrahlern weisen Bogenentladungslampen mit diskreten Spektren bei den Wellenlängen der strahlenden Übergänge des Gases eine besonders hohe Lichtausbeute auf, da die zur Gasentladung eingesetzte elektrische Energie in einem sehr schmalen Wellenlängenbereich in Strahlung umgewandelt wird und nicht wie bei thermischen Strahlern auf ein Plancksches Spektrum verteilt ist. Es existieren heute Bogenentladungslampen mit Spektrallinien primär im nahen Infrarot mit einer Strahlungsdichte von bis zu 3.5 kW/cm² (= 35 MW/m²).

Alternative monochromatische Strahlungsquellen für NIR-Anwendungen können beispielsweise Diodenlaser darstellen. Sie weisen heutzutage eine elektrischoptische Effizienz von 40-50% auf, die deutlich unter der thermischer Strahler und von Gasentladungslampen liegt (> 70%). Jedoch wird die Strahlung von Laserdioden im wesentlichen gerichtet in der Ebene des pn-Übergangs emittiert, so dass im wesentlichen keine weiteren Sammeleinrichtungen notwendig sind, um die Strahlung in Richtung auf das zu bearbeitende Material zu richten. Des weiteren ist es möglich mehrere Einzellaser zu einem sogenannten Laserbarren (eindimensionales Laserarray) zu kombinieren, womit im wesentlichen eine längliche Strahlungsquelle erzeugt wird. Durch Aneinanderreihung mehrerer Laserbarren lässt sich ein Stapel bzw. Stack (zweidimensionales Laserarray) erzeugen, der eine flächige Strahlungsquelle darstellt. Halbleiterlaser auf GaAs-Basis emittieren im nahen Infrarot mit Wellenlängen zwischen 0,78 µm und 0,98 µm, d.h. auch im nahen Infrarot. Diese Strahlungsquellen sind somit zur Anwendung in NIR-Prozessen geeignet.

Laserdioden sind in großflächigen homogenen Bestrahlungen sowie in Anwendungen, bei welchen diskontinuierliche Strahlungsdichten zur Erzeugung von Temperaturprofilen erforderlich sind oder Strahlung nur in Form bestimmter Muster erzeugt werden soll, einsetzbar.

Hinsichtlich der bei der Qualitätssicherung und Prozeßsicherheit bevorzugten Verfahrensführung wird zumindest ein Prozeßparameter, insbesondere der Abstand zwischen der Bestrahlungsanordnung und der Oberfläche des Substrats oder die Temperatur auf dieser gemessen und dem Bediener der Bestrahlungsanordnung angezeigt, so dass dieser den Abstand bzw. die Temperatur vorgegebenen Werten nachführen und ggf. die elektrische Leistung und damit die Strahlungsleistung der Strahlungsanordnung verändern kann.

Vorzugsweise wird die Verfahrensführung jedoch vollständig automatisiert durchgeführt.

Eine Vorrichtung zur Realisierung einer gegebenenfalls automatischen Einstellung der Bestrahlungsparameter umfasst mindestens einen Messfühler zur Erfassung der relevanten physikalischen Größen, also insbesondere einen oder mehrere photoelektrische Sensoren zur Erfassung der Helligkeit, des Reflektionsvermögens oder des Brechungsindex oder anderer optischer Parameter.

Zur Einstellung der Bestrahlungsparameter ist dieser Sensor bzw. sind diese Sensoren über ihre Auswertungsschaltung insbesondere mit einem Steuereingang bzw. Steuereingängen einer Bestrahlungssteuereinrichtung verbunden. In Abhängigkeit von den erfassten Messwerten bzw. einem Ergebnis der Auswertung dieser Messwerte können die im weiteren Prozessverlauf einzustellenden Bestrahlungsparameter, insbesondere die Leistungsdichte und ggf. auch die spektrale Zusammensetzung der Strahlung optimiert werden. Durch das Vorsehen einer geschlossenen Regelschleife ist hierbei auch eine automatisch geregelte Betriebsführung realisierbar.

## Patentansprüche

1. Verfahren zur Volumenerwärmung eines Körpers beim Warmverformen von Thermoplasten mit elektromagnetischer Strahlung mit einem schmalbandigen oder diskreten Spektrum oder einem Bandenspektrum, dessen wesentlicher Wirkanteil im Wellenlängenbereich des nahen Infrarot liegt, **dadurch gekennzeichnet, dass** während der Volumenerwärmung die Wellenlänge der elektromagnetischen Strahlung variiert wird.

2. Verfahren nach Anspruch 1, wobei es sich bei der elektromagnetischen Strahlung um Strahlung einer schmalbandig emittierenden Strahlungsquelle, insbesondere von einer Plasma-, Lichtbogen- bzw. Gasentladungslampe oder von einem Laser handelt.

3. Verfahren nach Anspruch 1 oder 2, wobei der erforderliche Energieeintrag zur Volumenerwärmung des Körpers in einer Zeitdauer von weniger als 1 min, bevorzugt in weniger als 20 s und besonders bevorzugt in weniger als 1 s erfolgt.

4. Verfahren nach einem der vorhergehenden Ansprüche, wobei die Leistungsdichte der elektromagnetischen Strahlung insbesondere oberhalb von 100kW/m², bevorzugt oberhalb von 200kW/m² und besonders bevorzugt oberhalb von 1MW/m², liegt.

5. Verfahren nach einem der vorhergehenden Ansprüche, wobei die Bestrahlung über eine Fläche von mehr als 2500 cm², besonders bevorzugt von mehr als 1 m² und ganz bevorzugt von mehr als 4 m² im wesentlichen homogen erfolgt, wobei die Leistungsdichte auf der bestrahlten Oberfläche um nicht mehr als 10% schwankt.

6. Verfahren nach einem der vorhergehenden Ansprüche 1 bis 4, wobei die Strahlungsdichte über die bestrahlte Fläche entsprechend einem vorbestimmten Muster variiert, insbesondere ein vorbestimmtes Strahlungsprofil erzeugt wird.

7. Vorrichtung zur Durchführung des Verfahrens nach einem der vorhergehenden Ansprüche, wobei die Vorrichtung zumindest eine schmalbandig emittierende Strahlungsquelle mit wesentlichem Wirkanteil im Bereich des nahen IR, insbesondere einen Laser oder eine Plasma-, Lichtbogen- bzw. Gasentladungslampe, und Mittel zur Variation der Wellenlänge von deren Strahlung während der Volumenerwärmung aufweist, wobei die Leistungsdichte der NIR-Strahlung oberhalb von 100kW/m², bevorzugt oberhalb von 200 kW/m² und besonders bevorzugt oberhalb von 1MW/m², liegt.

8. Vorrichtung nach Anspruch 7, wobei die Strahlungsquelle ein Laserdiodenarray aufweist.

9. Vorrichtung nach Anspruch 8, wobei die Laserdioden des Laserdiodenarrays zur Erzeugung eines Strahlungsprofils einzeln und/oder in Gruppen steuerbar sind.

10. Vorrichtung gemäß einem der Ansprüche 7 bis 9 wobei die Strahlungsquelle geeignet ist eine über eine Fläche von insbesondere mehr als 400 cm², bevorzugt vom mehr als 2500 cm², besonders bevorzugt von mehr als 1 m² und ganz bevorzugt von mehr als 4 m² im wesentlichen homogene Bestrahlung zu erzeugen.

## Claims

1. Process for volume heating of a body when hot-forming of thermoplastics with electromagnetic radiation with a narrow-band or discrete spectrum or a band spectrum whose essential active component lies in the wavelength range of near infrared, **characterised in that**
the wavelength of the electromagnetic radiation is varied during volume heating.

2. Process according to Claim 1, whereby the electromagnetic radiation consists of radiation of a narrow-band emitting radiation source, in particular of a plasma, arc or gas discharge lamp or a laser.

3. Process according to Claim 1 or 2, whereby the necessary energy contribution for volume heating of the body takes place within a time period of less than 1 min, preferably in less than 20 s and, particularly preferred, in less than 1 s.

4. Process according to one of the previous claims, whereby the power density of the electromagnetic radiation particularly lies above 100 kW/m², preferably above 200 kW/m² and, particularly preferred, above 1 MW/m².

5. Process according to one of the previous claims, whereby the irradiation takes place over an area of more than 2,500 cm², and particularly preferably more than 1 m² and, most preferably of more than 4 m², whereby the power density on the irradiated surface fluctuates by not more than 10 %.

6. Process according to one of the previous claims 1 to 4, whereby the radiation density over the irradiated surface varies according to a predetermined pattern, in particular generating a predetermined radiation profile.

7. Device for implementing the process according to one of the aforementioned claims, whereby the device at least has a narrow-band emitting radiation source with an essential active component in the range of near infrared, in particular a laser or a plasma, arc or gas discharge lamp, and means for varying the wavelength of the radiation during volume heating, wherein the power density of the NIR radiation lies above 100 kW², preferably above 200 kW² and, particularly preferred, above 1 MW/m².

8. Device according to claim 7, wherein the radiation source comprises a laser diode array.

9. Device according to claim 8, wherein the laser diodes of the laser diode array can be controlled individually and/or in groups for the generation of a radiation profile.

10. Device according to one of claims 7 to 9, whereby the radiation source is adapted for generating essentially homogenous radiation over an area of particularly more than 400 cm², preferably of more than 2,500 cm², and particularly preferably more than 1 m² and, most preferably, of more than 4 m².

## Revendications

1. Procédé de chauffage dans la masse d'un corps lors du formage à chaud de thermoplastes par rayonnement électromagnétique d'un spectre à bande étroite ou discret ou d'un spectre de bande d'une proportion essentielle de rayonnement efficace figurant dans l'infrarouge proche, **caractérisé en ce que**
la longueur d'onde du rayonnement électromagnétique est modifiée pendant le chauffage dans la masse.

2. Procédé selon la revendication 1, dans lequel, dans le cas du rayonnement électromagnétique, il s'agit d'une source de rayonnement émettant en bande étroite, en particulier d'une ampoule plasma, à arc, à décharge gazeuse ou d'un laser.

3. Procédé selon la revendication 1 ou 2, dans lequel l'apport d'énergie nécessaire pour le chauffage dans la masse du corps s'effectue en une durée inférieure à 1 min, de préférence en moins de 20 s et, de manière particulièrement préférée, en moins de 1 s.

4. Procédé selon l'une quelconque des revendications précédentes, dans lequel la densité de puissance du rayonnement électromagnétique est, en particulier, supérieure à 100 kW/m², de préférence supérieure à 200 kW/m², et, de manière particulièrement préférée, supérieure à 1 MW/m².

5. Procédé selon l'une quelconque des revendications précédentes, dans lequel le rayonnement se réalise pour l'essentiel de façon homogène sur une surface supérieure à 2 500 cm², de préférence supérieure à 1 m², et, de manière particulièrement préférée, supérieure à 4 m², la densité de puissance sur la surface irradiée ne fluctuant pas de plus de 10 %.

6. Procédé selon l'une quelconque des revendications précédentes 1 à 4, dans lequel la densité de rayonnement sur la surface irradiée varie selon un motif prédéterminé et, en particulier, un profil de rayonnement prédéterminé est généré.

7. Dispositif pour appliquer le procédé selon l'une quelconque des revendications précédentes, le dispositif présentant une source de rayonnement émettant en bande étroite avec une proportion de rayonnement efficace pour l'essentiel dans le domaine de l'infrarouge proche, en particulier un laser ou une ampoule plasma, à arc ou à décharge gazeuse, et un moyen de variation de la longueur d'onde de son rayonnement pendant le chauffage dans la masse, la densité de puissance du rayonnement étant supérieure à 100 kW/m², de préférence supérieure à 200 kW/m², et, de manière particulièrement préférée, supérieure à 1 MW/m².

8. Dispositif selon la revendication 7, dans lequel la source de rayonnement présente un réseau de diodes laser.

9. Dispositif selon la revendication 8, dans lequel les diodes laser du réseau de diodes laser peuvent être pilotées individuellement et/ou en groupes de façon à générer un profil de rayonnement.

10. Dispositif selon l'une quelconque des revendications précédentes 7 à 9, dans lequel la source de rayonnement est adaptée à créer un rayonnement pour l'essentiel homogène sur une surface supérieure à 400 cm² en particulier, de préférence supérieure à 2 500 cm², de manière particulièrement préférée, supérieure à 1 m² et, de manière très préférée, supérieure à 4 m².
